# EUROPÄISCHE PATENTSCHRIFT

(11) **EP 0 798 552 B1**
(45) Veröffentlichungstag und Bekanntmachung des Hinweises auf die Patenterteilung: **02.06.2004**
(21) Anmeldenummer: 97104373.2
(22) Anmeldetag: 14.03.1997
(51) Int. Cl.: G01N 21/17

(54) **Photoakustischer Gassensor**
Photoacoustic gas sensor
Détecteur de gaz photoacoustique

(30) Priorität: 25.03.1996 EP 96104689
(43) Veröffentlichungstag der Anmeldung: 01.10.1997
(73) Patentinhaber: Siemens Building Technologies AG, 8034 Zürich (CH)
(72) Erfinder: Baraket, Mourad, Dr., 8712 Stäfa (CH); Feltre, Mauro, 8713 Uerikon (CH); Forster, Martin, Dr., 8645 Jona (CH); Lenggenhager, Rene, Dr., 8810 Horgen (CH); Portmann, Andreas, 8713 Uerikon (CH); Tenchio, Georges, 8123 Ebmatingen (CH)
(74) Vertreter: Berg, Peter, Dipl.-Ing.

(56) Entgegenhaltungen:
- EP-A- 0 151 474
- DE-A- 3 832 906
- GB-A- 2 190 998
- APPLIED PHYSICS LETTERS, Bd. 31, Nr. 11, 1.Dezember 1977, NEW YORK US, Seiten 728-730, XP002011370 MURPHY J C ET AL: "THE PHOTOTHERMOPHONE, A DEVICE FOR ABSOLUTE CALIBRATION OF PHOTOACOUSTIC SPECTROMETERS"
- REVIEW OF SCIENTIFIC INSTRUMENTS, Bd. 67, Nr. 2, 1.Februar 1996, Seiten 371-374, XP000584515 BARNES J A ET AL: "ABSOLUTE INTENSITIES IN PHOTOACOUSTIC SPECTROSCOPY"

## Beschreibung

Die Erfindung betrifft einen photoakustischen Gassensor für die Messung der Konzentration von Gasen mit einer Messzelle, einer Lichtquelle, einer Photodiode, einer gaspermeablen Membran, einem Mikrofon und einer Schaltung zum Betrieb der Lichtquelle und zur Auswertung der Mikrofonsignale

Photoakustische Gassensoren werden in Forschung und Industrie zur Feststellung der Konzentration von bestimmten vorherrschenden Gasen eingesetzt. Ihre Anwendungsbereiche sind zum Beispiel die Überwachung von Prozessen in Bioreaktoren oder Brauereien und von Gaskonzentrationen in Laboratorien und anderen Arbeitsräumen zwecks Einhaltung der maximalen Arbeitsplatzkonzentrationen (MAK). Sie stellen die Anwesenheit und Konzentration eines Gases fest und geben bei Überschreiten einer vorgegebenen Konzentration ein Alarm- oder Warnsignal ab.

Heute verwendete photoakustische Gassensoren, wie zum Beispiel der in der EP-A-0 151 474 beschriebene, bestehen typischerweise aus einer Messzelle mit einer gaspermeablen Membran, einer gepulst betriebenen Lichtquelle, einer Photodiode, einem Mikrofon und einer elektrischen Schaltung zum Betrieb der Lichtquelle und des Mikrofons und zur Auswertung des Mikrofonausgangssignals. Die Lichtquelle sendet Lichtpulse in die Messzelle, die eine Wellenlänge besitzen, die von dem zu detektierenden Gas absorbiert werden. Hierzu werden entweder schmalbandige Lichtquellen wie Leuchtdioden und Laser oder breitbandige Lichtquellen wie Glühwendel zusammen mit einem optischen Bandpassfilter eingesetzt. Die Photodiode dient dazu, die Intensität der Lichtpulse zu messen, wobei die von ihr resultierenden Signale der Regulierung der Betriebsspannung der Lichtquelle und Einhaltung einer stabilen Lichtintensität dienen. Befindet sich ein zu detektierendes Gas in der Umgebung des Gassensors, dringt es durch die gaspermeable Membran in die Messzelle ein und absorbiert dort das eingestrahlte Licht. Die Absorption der Lichtpulse bewirkt eine Erwärmung und Ausdehnung des Gases in der Messzelle, wodurch eine Druckmodulierung erzeugt wird, die vom Mikrofon empfangen und in ein elektrisches Signal umgewandelt wird. Das Ausgangssignal des Mikrofons wird von einer Auswerteschaltung verstärkt und mit Gaskonzentrationswerten verglichen, die bei einer Eichung des Sensors gespeichert worden sind. Aufgrund der gespeicherten Eichwerte wird die Konzentration des detektierten Gases bestimmt und gegebenenfalls ein Wam- oder Alarmsignal abgegeben.

Ist das Ausgangssignal solcher Gassensoren gleich Null, besteht die Unsicherheit, ob dieses Nullsignal einer Abwesenheit des zu detektierenden Gases entspricht oder einem Defekt an einer seiner Komponenten zugrunde liegt, wie zum Beispiel einem Abfall der Mikrofonempfindlichkeit.

Von diesem Stand der Technik ausgehend, ist der Erfindung die Aufgabe gestellt, einen photoakustischen Gassensor der eingans genannten Art zu schaffen, der eine Überwachung des Funktionszustandes des Mikrofons und der Membran sowie eine Kalibrierung der Mikrofonempfindlichkeit ermöglicht.

Diese Aufgabe wird erfindungsgemäss durch die Merkmale des Anspruchs 1 gelöst, insbesondere durch eine Vorrichtung für die Überwachung der Funktionstüchtigkeit der gaspermeablen Membran und des Mikrofons und für die Durchführung einer Kalibrierung der Mikrofonempfindlichkeit sowie für die aktive, modulierte Erwärmung der in der Messzelle befindlichen Luft zwecks Erzeugung einer künstlichen, von der Anwesenheit von zu detektierenden Gasen in der Messzelle unabhängigen Druckmodulierung, sowie durch einen Teil der Schaltung bildenden Mikroprozessor für den Betrieb der Vorrichtung für die Erzeugung der modulierten Erwärmung und die Verarbeitung und Auswertung von aufgrund der künstlichen Druckmodulierung vom Mikrofon erzeugten Überwachungssignalen zur Feststellung des Funktionszustands des Mikrofons und der Membran und zur Feststellung und Kalibrierung der Mikrofonempfindlichkeit, wobei durch den Mikroprozessor eine Zuordnung der Grösse der Überwachungssignale zu Bereichen und eine Bewertung der zeitlichen Veränderung der Überwachungssignale erfolgt und bei einem Überwachungssignal in einem ersten positiven Bereich eine Meldung für korrekte Funktion der gaspermeablen Membran und des Mikrofons abgegeben wird und bei einem Überwachungssignal, das sich innerhalb eines zweiten, dem ersten benachbarten Bereichs aufgrund einer Langzeitdrift zeitlich langsam verändert, eine Kalibrierung der Mikrofonempfindlichkeit durchgeführt wird, indem entsprechend der Grösse des Überwachungssignals neue Gaskonzentrationswerte berechnet und in einem EEPROM abgespeichert werden, und bei einem Überwachungssignal, das sich innerhalb dieses zweiten Bereichs zeitlich schnell verändert oder bei einem Überwachungssignal ausserhalb des ersten und des zweiten Bereichs eine Störungsmeldung abgegeben wird, die auf einen Defekt am Mikrofon und/oder an der Membran hinweist.

Photoakustische Gassensoren mit einer Vorrichtung zur aktiven modulierten Erwärmung der in der Messzelle befindlichen Luft zwecks Erzeugung einer künstlichen, von der Anwesenheit von zu detektierenden Gasen in der Messzelle unabhängigen Druckmodulierung und mit einer Schaltung zum Betrieb der genannten Vorrichtung für die Erzeugung der modulierten Erwärmung und zur Verarbeitung und Auswertung von aufgrund der künstlichen Druckmodulierung vom Mikrofon erzeugten Überwachungssignalen sind aus den Publikation "The Photothermophone, a Device for Absolute Calibaration of Photoacoustic Spectrometers" von J. C. Murphy et al in Applied Physics Letters, Bd. 31, Nr. 11, 1. Dezember 1977, New York, Seiten 728-730 und "Absolute Intensities in Photoacoustic Spectroscopy" von J. A. Barnes et al in Review of Scientific Instruments, Bd. 67, Nr. 2, 1. Februar 1996, an sich bekannt. Diese phötoakustischen Gassensoren sind eher für Laboranwendungen als für industrielle Anwendungen geeignet.

Beim erfindungsgemässen photoakustischen Gassensor wird aufgrund des resultierenden Überwachungssignals auf die Funktionstüchtigkeit der Membran und des Mikrofons geschlossen und gegebenenfalls eine Kalibrierung der Mikrofonempfindlichkeit durchgeführt, wobei die Grösse sowie die zeitliche Veränderung des Überwachungssignals ausgewertet werden. Dabei wird die Grösse des resultierenden Überwachungssignals einem von mehreren verschiedenen Bereichen zugeordnet. Fällt die Grösse des Überwachungssignals in einen vorgegebenen positiven Bereich, gibt die Schaltung eine Meldung ab, die darauf hinweist, dass sowohl die Membran als auch das Mikrofon richtig funktionieren. Fällt das Überwachungssignals im Vergleich zum ersten vorgegebenen Bereich in einen höheren oder tieferen Bereich, wird von einem Mikroprozessor eine Kalibrierung der Mikrofonempfindlichkeit durchgeführt, indem aufgrund der festgestellten Mikrofonempfindlichkeit die Gaskonzentrationswerte neu berechnet werden und im EEPROM abgespeichert werden. Werden andererseits vorgegebene Schwellenwerte vom Überwachungssignal entweder über- oder unterschritten, gibt die Schaltung eine Störungsmeldung ab, die darauf hinweist, dass entweder durch eine undichte Membran keine Druckmodulierung in der Messzelle entstanden ist, die Empfindlichkeit des Mikrofons auf Null abgefallen und/oder das Heizelement defekt ist.

Ausführungsformen der Erfindung sind anhand der folgenden Zeichnungen erläutert.
Figur 1 zeigt einen photoakustischen Gassensor im Querschnitt mit einer Vorrichtung zur Erwärmung der Luft in der Messzelle.
Figuren 2 a) und b) zeigen eine Ausführung eines elektrischen Heizelementes zur Erwärmung der Luft in der Messzelle und der Montage eines elektrisch heizbaren Drahtes als Heizelement.
Figur 3 zeigt einen schematischen Aufbau der Schaltung zum Betrieb der Überwachungsvorrichtung des Gassensors und Auswertung der Ausgangssignale des Mikrofons.
Figur 4 zeigt ein Beispiel eines zeitlichen Verlaufs einer Überwachung des Gassensors und Kalibrierung der Mikrofonempfindlichkeit.
Figur 5 zeigt die verschiedenen Bereiche, denen die Überwachungssignale zwecks ihrer Bewertung zugeordnet werden.

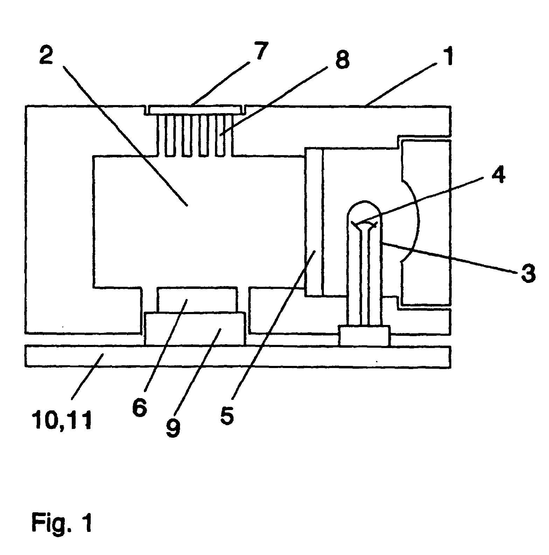

Figur 1 zeigt einen photoakustischen Gassensor 1 im Querschnitt mit einer Messzelle 2, einer Lampe 3 mit einem Glühwendel 4 als Lichtquelle und einem optischen Bandpassfilter 5, einem Mikrofon 6 und einer gaspermeablen Membran 7, die auf einem Lochgitter 8 liegt und mit Klebstoff mit der Messzellwand dicht verbunden ist. (Eine Photodiode zur Überwachung der Lichtintensität ist hier nicht eingezeichnet). Vom Glühwendel 4 gehen breitbandige Lichtpulse aus, die nach einer spektralen Filterung am Bandpassfilter 5 die Messzelle 2 ausstrahlen. Beispielsweise ist das optische Bandpassfilter 5 in einem schmalen Spektralbereich um die Wellenlänge von 4.26 µm durchlässig, das von CO₂-Gas absorbiert wird. Befindet sich CO₂-Gas in der Umgebung des Gassensors 1, dringt es durch die gaspermeable Membran 7 in die Messzelle 2 ein, wo es das Licht absorbiert und sich erwärmt. Durch die Erwärmung dehnt es sich aus und erzeugt eine Druckmodulierung, die vom Mikrofon 6 in ein elektrisches Signal umgewandelt wird. Zur Überwachung der Funktion der Membran 7 und des Mikrofons 6 weist der Gassensor 1 ein Heizelement 9 auf, das an einem beliebigen Ort im Innenraum der Messzelle 2 angeordnet ist. Vorzugsweise ist es in der Nähe der Leiterplatte 10 mit der Schaltung 11 zum Betrieb des Gassensors 1 und Heizelements 9 sowie zur Auswertung der Ausgangssignale des Mikrofons 6. Das Heizelement 9 besteht vorzugsweise aus einem dünnen Draht, wobei sich aber auch konventionelle und Surface-Mount-Widerstände sowie Heizfolien dafür eignen. Eine weitere Ausführung der Vorrichtung der Erwärmung der Luft ist die elektrische Erwärmung des Mikrofongehäuses. An das Heizelement 9 wird eine modulierte Spannung angelegt, wodurch es selbst und die Luft in der Messzelle 2 erwärmt werden und durch die Ausdehnung der Luft eine künstliche und von der Anwesenheit von zu detektierenden Gasen unabhängige Druckmodulierung erzeugt wird. Diese Druckmodulierung wird vom Mikrofon 6 in ein elektrisches Signal umgewandelt, das von der Schaltung 11 verstärkt und ausgewertet wird, worauf eine Meldung abgegeben wird, die angibt, ob das Mikrofon 6 und die Membran 7 funktionieren oder die Mikrofonempfindlichkeit im Vergleich zum Beginn der Einsatzzeit des Gassensors 1 sich verändert hat. Das Heizelement 9 und die Komponenten der Schaltung 11 sowie ihre Betriebsparameter erfüllen die Bestimmungen für einen explosionssicheren Betrieb gemäss des PTB. Diese Bestimmungen, zum Beispiel die der Temperaturklassen T6 und T4 der Euronorm EN 50020:1994, setzen die Maximaltemperatur von Komponenten bei 85°C bzw. 135°C fest. Um eine Zündfähigkeit im Falle eines Defekts des Heizelements auszuschliessen, muss auch der Strom und die Spannung begrenzt werden. Die Strombegrenzung für das Heizelement liegt hier bei 1 mA. Die Bestimmungen für die Temperaturklasse T6 werden von der Überwachungsvorrichtung des Gassensors eingehalten; die Höchsttemperatur des Heizelementes 9 beträgt weniger als 85°C, und mit dem begrenzten Stromfluss von 1 mA wird eine für die Überwachung genügende Erwärmung der Luft erzielt. Hierbei wird die höchste Betriebstemperatur des Gassensors 1 berücksichtigt: Beträgt diese 60°C, darf sich das Heizelement 9 um nicht mehr als 25°C erwärmen. Es wird also ein Heizelement 9 mit entsprechendem Widerstand eingesetzt und bei Verwendung eines Drahtes sind dessen Durchmesser, Länge und Material auf diesen Widerstand abgestimmt. Das Material ist vorzugsweise eines, das chemisch stabil ist und dessen Widerstand sich als Funktion der Temperatur möglichst wenig verändert, sodass die vom Draht abgegebene Wärmeleistung über lange Zeit stabil und unabhängig von der Temperatur sind. Beispiele geeigneter Materialien sind Nikrothal und Konstantan. Wird stattdessen ein Material mit höherem Temperaturkoeffizienten des spezifischen Widerstands eingesetzt, wäre die Wahl der Parameter des Drahtes erschwert, da die am Heizelement angelegte Spannung entsprechend der Drahttemperatur reguliert werden müssten. Ein Beispiel eines Heizelementes, das den genannten Rahmenbedingungen genügt, ist ein Draht aus Nikrothal mit einem Durchmesser von 30 µm und einer Länge von 1 cm, dessen Widerstand 20 Ω beträgt. Fliesst ein Strom von 0.6 mA bei einer angelegten Spannung von 12 mV durch diesen Draht, erwärmt er sich nach theoretischer Berechnung um 2.5°C, während die gemessene Temperaturerhöhung des Drahtes ca. 1°C beträgt. Die Parameter und das Material des Drahtes können auch entsprechend gewählt werden, sodass nur die Bestimmungen der Temperaturklasse T4 erfüllt sind.

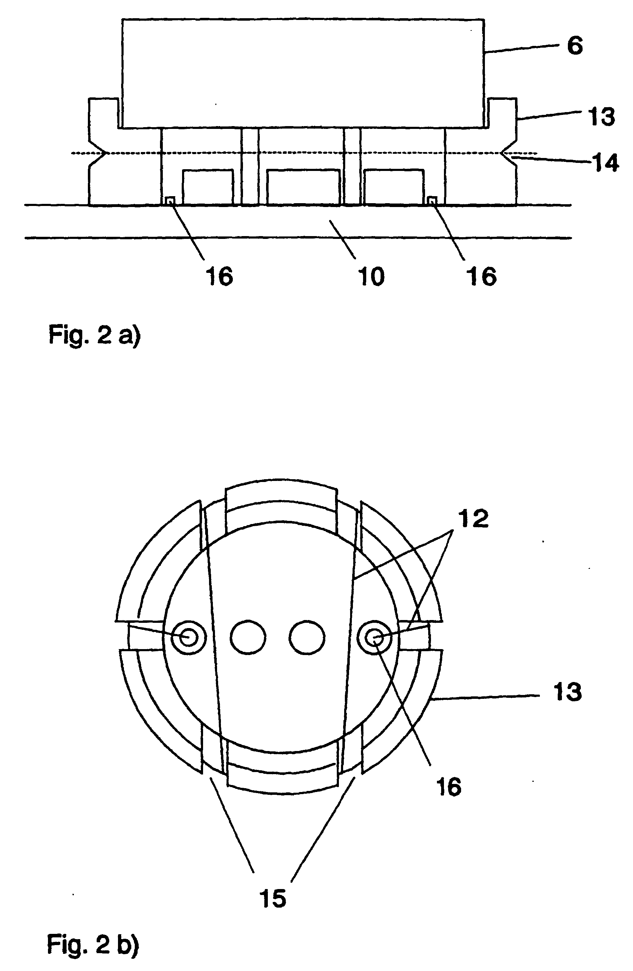

Figuren 2 a) und b) zeigen in einem Querschnitt bzw. einer Draufsicht ein Beispiel einer Montage eines Drahtes 12 als Heizelement 9. Der Draht 12 ist auf einem zylindrischen Träger 13 befestigt, der am Mikrofon 6 angefügt und mit Klebstoff an der Leiterplatte 10 befestigt ist. Um einen Luftraum zwischen dem Mikrofon 6 und dem Draht 12 zu gewähren ist das Mikrofon 6 auf einem Absatz befestigt. Dadurch dient der zylindrische Träger zugleich als Halterung für das Mikrofon 6. An der Aussenseite des zylindrischen Trägers 13 ist der Draht in einer Kerbe 14 geführt, sodass sich dieser auf der mit der gestrichelten Linie eingezeichneten Ebene verläuft und sich von ihr nicht verschiebt. Dies bezweckt, dass unter sowie über dem Draht 12 ein Luftraum besteht und er elektrisch isoliert ist, indem er mit der Wand der Messzelle 2 und dem Mikrofon nicht in Kontakt kommt. Der zylindrische Träger 13 besteht aus einem nicht leitenden Material, wie zum Beispiel Polycarbonat. Der Draht 12 ist gleich einem Mäander um mehrere Schlitze 15 am oberen Rand des zylindrischen Trägers 13 gewunden. Die Enden des Drahtes 12 sind durch Löcher in der Mitte des zylindrischen Trägers 13 geführt und mit Lötstellen 16 auf der Leiterplatte 10 verlötet.

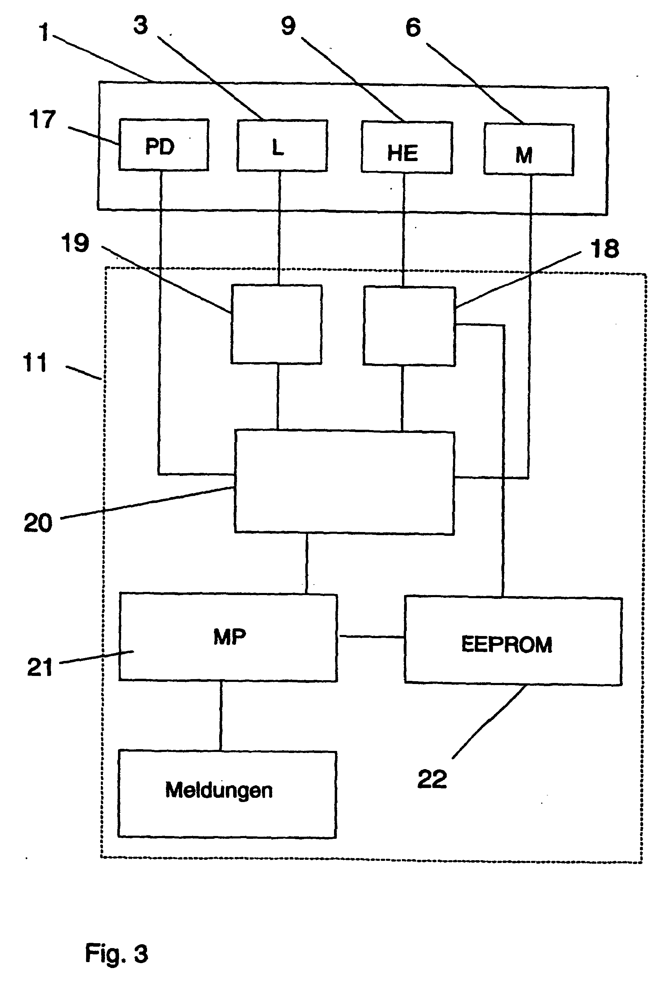

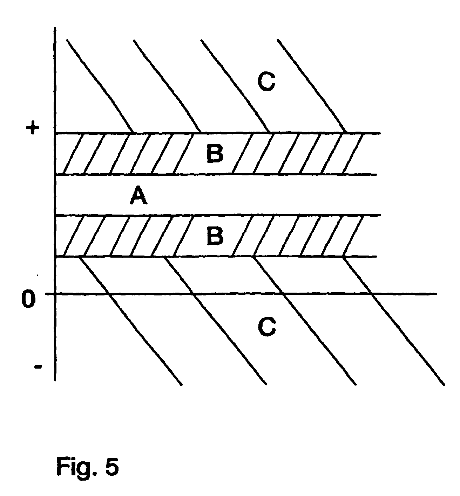

Figur 3 zeigt einen schematischen Aufbau des Gassensors 1 mit Überwachungsvorrichtung. Sie zeigt die elektrischen Komponenten des Gassensors 1, die Lampe L 3, das Mikrofon M 6, die Photodiode PD 17 und das Heizelement HE 9 sowie die Schaltung 11 zum Betrieb des Gassensors 1 und der Überwachungsvorrichtung. Die Schaltung 11 enthält eine erste Treiberschaltung 18 für das Heizelement 9 und eine zweite Treiberschaltung 19 für die Lampe L 3. Die vom Mikrofon M 6 aufgrund von empfangenen Druckmodulierungen erzeugten elektrischen Signale werden einer Auswerteschaltung 20 zugeführt, wo sie linear verstärkt, durch ein Hochpass- und Tiefpassfilter bereinigt und durch einen phasenempfindlichen Gleichrichter synchron gleichgerichtet und geglättet werden. Die resultierenden DC-Signale werden an einen Mikroprozessor MP 21 weitergeleitet, der sie mit vorgegebenen Vergleichswerten vergleicht. Fallen die Grössen der Überwachungssignale in vorgegebene Kalibrationsbereiche (siehe hierzu auch Fig. 5), bedeutet dies, dass die Mikrofonempfindlichkeit sich verändert hat. In diesem Fall wird vom Mikroprozessor MP 21 die zeitliche Veränderung des Überwachungssignals in der Bewertung einbezogen. Bei einer langsamen Veränderung, wie zum Beispiel einer Veränderung über mehrere Tage, wird dies als Langzeitdrift bewertet, und es wird eine Kalibrierung der Mikrofonempfindlichkeit durchgeführt, indem die im EEPROM 22 gespeicherten Werte zur Bestimmung der Konzentrationswerte oder Gaskonzentrationswerte entsprechend der Veränderung der Mikrofonempfindlichkeit nachgeführt werden. Dies geschieht, indem die prozentuale Veränderung der Überwachungssignale bestimmt wird und die Gaskonzentrationswerte entsprechend geändert werden. Mit dieser Nachführung der Mikrofonempfindlichkeit wird die Langzeitdrift des Mikrofons korrigiert. Bei einer schnellen Veränderung innerhalb der Kalibrationsbereiche sowie in dem Fall, dass die Überwachungssignale die Kalibrationsbereiche unter- oder überschreiten, wird vom Mikroprozessor eine Meldung abgegeben, wie zum Beispiel ein optisches oder akustisches Signal, das auf eine Störung am Mikrofon und/oder an der Membran hinweist.

Das EEPROM 22 enthält ausser den Gaskonzentrationswerten weitere Betriebsdaten des Gassensors wie Zähler, Temperaturen des Messgases, Helligkeitswerte der Lampe 3 und Phasenwerte für die optimale Verstärkung der Mikrofonsignale. Die Temperaturen des Messgases werden durch einen im Mikroprozessor 20 enthaltenen Temperaturfühler festgestellt und für die Neuberechnung der temperaturabhängigen Gaskonzentrationswerte durch den Mikroprozessor 21 verwendet. Die Helligkeitswerte der Lampe 3 werden von der Photodiode 17 und der Auswerteschaltung 20 dem Mikroprozessor 21 zugeführt und für die Regelung der Lichtintensität der Lampe 3 verwendet, indem die nötige Impulsdauer berechnet und der Treiberschaltung 19 für die Lampe 3 zugeführt wird. Die Phasenwerte sind die Phasenunterschiede zwischen Spannungssignal für das Heizelement 9 und dem Ausgangssignal des Mikrofons 6. Die Phasenwerte werden während der Herstellung des Gassensors 1 bestimmt, indem die Verstärkung des Ausgangssignals des Mikrofons 6 durch Eingabe der Phase optimiert wird. Die Phase, bei der das Mikrofonsignal ein Maximum erreicht, wird sodann im EEPROM 22 gespeichert.

Das EEPROM 22 ist ein serielles EEPROM mit einem Integrated Interface Circuit-Bus (IIC-Bus). Dank diesem IIC-Bus ist nebst der Clockleitung nur eine Datenleitung nötig. Die Clock des EEPROMs dient zugleich als Clock für das Heizelement 9, indem das Clocksignal der ersten Treiberschaltung 18 für das Heizelement 9 zugeführt wird.

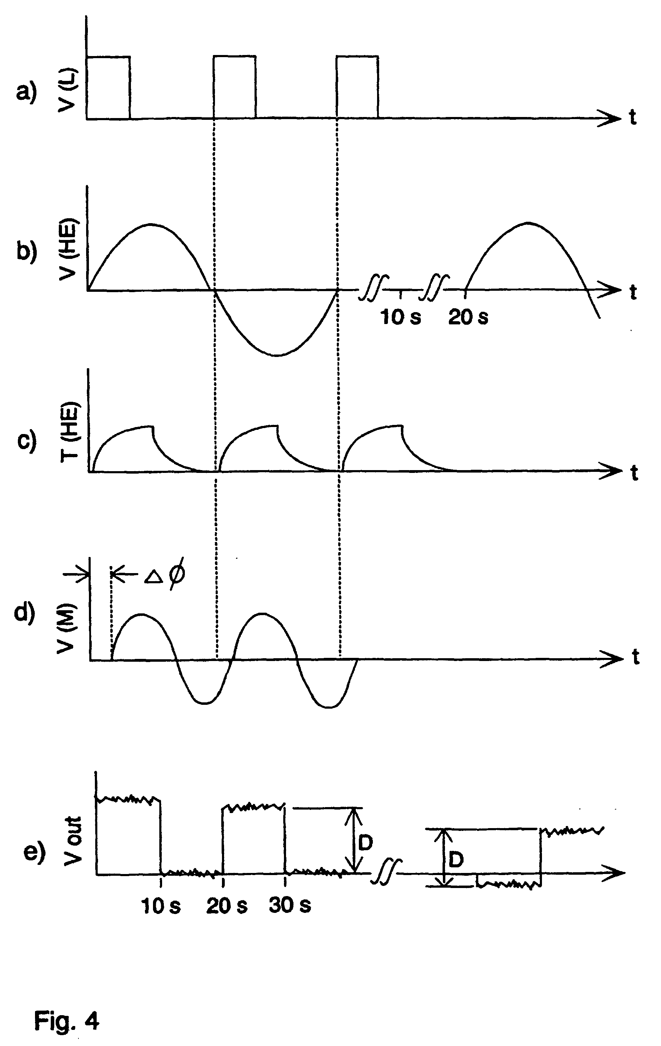

Figur 4 zeigt ein Beispiel eines zeitlichen Verlaufs einer Überwachung des Gassensors 1 als Funktion der Zeit t. Figur 4 a) zeigt die Spannungspulse V(L) für den Betrieb der Lampe 3. Beispielsweise wird sie bei 14 Hz und einem Arbeitszyklus von einem Drittel betrieben. Ein Heizelement zur Erwärmung der Messzelle 2 wird, wie die modulierte Spannung V(HE) in Figur 4 b) zeigen, bei 7 Hz betrieben, wobei die Leistungskurve die Taktfrequenz von 14 Hz hat. Die Spannung V(L) dient zugleich auch zum Triggern des phasenempfindlichen Gleichrichters der Auswerteschaltung 20. Eine Synchronisation der Lampe 3 und der Erwärmung des Heizelementes 9 erlaubt eine einfachere Auswertung der Überwachungssignale und Gassignale mit denselben elektrischen Komponenten. Die modulierte Spannung hat aus Gründen des elektrischen Übersprechens vorzugsweise eine Sinusfunktion; eine Dreiecks- oder Trapezfunktion oder eine Funktion mit beliebigen Flanken eignen sich ebenfalls. Figur 4 c) zeigt den ungefähren Temperaturverlauf T(HE) eines Nikrothaldrahts von 2.5 cm Länge und 30 µm im Durchmesser, durch den gemäss Figur 4 b) ein Strom von weniger als 1 mA fliesst. Figur 4 d) zeigt ein vom Mikrofon 6 erzeugtes Mikrofonsignal V(M), in diesem Fall das von der künstlichen Erwärmung der Messzelle 2 resultierende Überwachungssignal. Die Phasenverschiebung Δφ des erzeugten Signals bezüglich der Spannung zum Betrieb der Lampe 3 ist die bei der Herstellung durch Optimierung des Mikrofonsignals festgestellte und im EEPROM 22 gespeicherte Phase. Selbstverständlich werden Mikrofonsignale, die durch die Anwesenheit von detektierbaren Gasen in der Messzelle herbeigeführt werden, ebenfalls mit dieser Phasenverschiebung Δφ verstärkt.

Figur 4 e) zeigt das DC-Ausgangssignal Vout der Auswerteschaltung 20 der Überwachungsvorrichtung über längere Zeit. An diesem Betriebsbeispiel wird die Überwachungsvorrichtung bei einer Frequenz von 1/10 Hz ein- und ausgeschaltet, wodurch vermieden wird, dass die Überwachungsvorrichtung permanent in Betrieb ist. Das Überwachungssignal ist jeweils um eine Grössenordnung kleiner als das Signal, das von einer Gasdetektion herrührt. Es kann also mit Sicherheit von einem Gasalarmsignal unterschieden werden. Über eine gegebene Zeitdauer, zum Beispiel 30 Sekunden, wird der Mittelwert der Signaldifferenz D zwischen dem ein- und ausgeschalteten Zustand bestimmt. Dieser Mittelwert ist die massgebende Grösse des Überwachungssignals und wird vom Mikroprozessor 21 den Bereichen in Fig. 5 zugeordnet.

Aus Platz- und Kostengründen besitzt eine bevorzugte Ausführung des photoakustischen Gassensors kleine Dimensionen. In Gassensoren dieser Art ergibt sich ein Problem des elektrischen Übersprechens zwischen den Komponenten während in grösseren photoakustischen Messgeräten diese Probleme weniger entstehen, da die Komponenten dort weiter auseinander plaziert werden können. In einem kleinen Gassensor ist das Heizelement sehr nahe dem Mikrofon angeordnet. Zusätzlich sind das Heizelement und das Mikrofon zwecks Einsparung von elektrischen Komponenten mit derselben Speisung verbunden. Dies verursacht oft ein elektrisches Übersprechen zwischen dem Heizelement und dem Mikrofon, das Störsignale auf dem Mikrofonsignal V(M) bewirkt. Der Betrieb des photoakustischen Gassensors verläuft ähnlich wie in Figur 4 dargestellt, jedoch mit einer zusätzlichen Phasenverschiebung der Spannung zum Betrieb des Heizelements V(HE) und des resultierenden Temperaturverlaufs T(HE) in den Figuren 4 b) und c). Die Spannung für die Lampe V(L) dient wiederum zum Triggern des phasenempfindlichen Gleichrichters für die Verstärkung des Mikrofonsignals V(M). Dabei wird das Mikrofonsignal V(M) zwecks Optimierung der Signalstärke mit der Phasenverschiebung Δφ bezüglich V(L) verstärkt. Um den elektrischen Einfluss der Heizspannung auf das Mikrofon auf ein Minimum zu reduzieren, wird nun die Heizspannung für das Heizelement V(HE) in Bezug auf das Mikrofonsignal V(M) in seiner Phase verschoben. Die Phasenverschiebung wird dabei experimentell so bestimmt, dass das elektrische Übersprechen auf einen Minimalwert fällt. Während die Spannung für das Heizelement V(HE) in Bezug auf das Mikrofonsignal V(M) phasenverschoben ist, ist das durch das Heizelement künstlich herbeigeführte Überwachungssignal mit dem Mikrofonsignal V(M) annähernd in Phase. Dies wird durch eine speziell für diese Anwendung gewählte thermische Trägheit des Drahtes für das Heizelement herbeigeführt. Die thermische Trägheit wird hierzu experimentell so gewählt, dass der Temperaturanstieg T(HE) und somit auch das künstlich herbeigeführte Überwachungssignal annähernd in Phase ist mit dem Mikrofonsignal V(M). Sind beispielsweise das Überwachungssignal und das Mikrofonsignal V(M) nur noch um 30° ausser Phase, ist das elektrische Übersprechen gleich Null, wobei das Überwachungssignal 85% seines Maximalwerts erreicht.

Fig. 5 zeigt drei verschiedene Bereiche A, B und C. Je nach dem Bereich, in welchen der Mittelwert fällt, wird das Überwachungssignal gemäss der nachfolgenden Logiktabelle interpretiert und eine Meldung abgegeben. Fällt der Mittelwert der Signaldifferenz D in den Bereich A, ist durch eine intakte Membran und bei voller Mikrofonempfindlichkeit der normale Signalgrösse erreicht worden, und es wird vom Mikroprozessor eine Meldung abgegeben, die darauf hinweist, dass die Membran und das Mikrofon korrekt funktionieren. Fällt der Mittelwert in einen der beiden Bereiche B und verändert sich nur langsam über längere Zeit, wird eine Neukalibrierung zur Nachführung der Mikrofonempfindlichkeit durchgeführt. Ist die zeitliche Veränderung dagegen schnell, liegt diese nicht einer Langzeitdrift sondern einem Defekt zugrunde, und es erfolgt eine Störungsmeldung. Fällt der Mittelwert in die Bereiche C, liegt die Mikrofonempfindlichkeit ausserhalb des nachführbaren Bereichs und es wird sowohl bei einer schnellen als auch langsamen zeitlichen Veränderung eine Störungsmeldung abgegeben.

| Mittelwert des Überwachungssignals | Zeitliche Veränderung des Mittelwerts des Überwachungssignals | | Meldung oder Aktion des Mikroprozessors MP |
|---|---|---|---|
| A | schnell | | korrekte Funktion |
| | | langsam | korrekte Funktion |
| B | langsam | | Neukalibrierung |
| | | schnell | Störung |
| C | schnell | | Störung |
| | | langsam | Störung |

## Patentansprüche

1. Photoakustischer Gassensor (1) für die Messung der Konzentrationen von Gasen mit einer Messzelle (2), einer Lichtquelle, einer Photodiode (17), einer gaspermeablen Membran (7), einem Mikrofon (6) und einer Schaltung (11) zum Betrieb der Lichtquelle und zur Auswertung der Mikrofonsignale, **gekennzeichnet durch** eine Vorrichtung für die Überwachung der Funktionstüchtigkeit der gaspermeablen Membran (7) und des Mikrofons (6) und für die Durchführung einer Kalibrierung der Mikrofonempfindlichkeit sowie für die aktive, modulierte Erwärmung der in der Messzelle (2) befindlichen Luft zwecks Erzeugung einer künstlichen, von der Anwesenheit von zu detektierenden Gasen in der Messzelle (2) unabhängigen Druckmodulierung sowie **durch** einen, einen Teil der Schaltung (11) bildenden Mikroprozessor (21) für den Betrieb der Vorrichtung, für die Erzeugung der modulierten Erwärmung und die Verarbeitung und Auswertung von aufgrund der künstlichen Druckmodulierung vom Mikrofon (6) erzeugten Überwachungssignale zur Feststellung des Funktionszustands des Mikrofons (6) und der Membran (7) und zur Feststellung und Kalibrierung der Mikrofonempfindlichkeit, wobei **durch** den Mikroprozessor (21) eine Zuordnung der Grösse der Überwachungssignale zu Bereichen und eine Bewertung der zeitlichen Veränderung der Überwachungssignale erfolgt und bei einem Überwachungssignal in einem ersten positiven Bereich eine Meldung für korrekte Funktion der gaspermeablen Membran (7) und des Mikrofons (6) abgegeben wird und bei einem Überwachungssignal, das sich innerhalb eines zweiten, dem ersten benachbarten Bereichs aufgrund einer Langzeitdrift zeitlich langsam verändert, eine Kalibrierung der Mikrofonempfindlichkeit durchgeführt wird, indem entsprechend der Grösse des Überwachungssignals neue Gaskonzentrationswerte berechnet und in einem EEPROM (22) abgespeichert werden, und bei einem Überwachungssignal, das sich innerhalb dieses zweiten Bereichs zeitlich schnell verändert oder bei einem Überwachungssignal ausserhalb des ersten und des zweiten Bereichs eine Störungsmeldung abgegeben wird, die auf einen Defekt am Mikrofon (6) und/oder an der Membran (7) hinweist.

2. Photoakustischer Gassensor (1) nach Patentanspruch 1, **dadurch gekennzeichnet, dass** die Schaltung (11) eine erste Treiberschaltung (18) zum Betrieb der Lichtquelle, eine zweite Treiberschaltung (19) zum Betrieb der Vorrichtung zur Erwärmung der in der Messzelle (2) befindlichen Luft und eine Verarbeitungsschaltung (20) für die Verstärkung und Filterung der vom Mikrofon (6) erzeugten Überwachungssignale enthält, und dass im Mikroprozessor (21) eine Auswertung der Überwachungssignale im Vergleich zu vorgegebenen Wertbereichen und eine Berechnung von Gaskonzentrationswerten gemäss der festgestellten Mikrofonempfindlichkeit und deren Speicherung im EEPROM (22) erfolgt.

3. Photoakustischer Gassensor (1) nach Patentanspruch 2, **dadurch gekennzeichnet, dass** die Vorrichtung zur modulierten Erwärmung der in der Messzelle (2) befindlichen Luft ein elektrisches Heizelement (9) aufweist, das aus einem Draht (12), einem Widerstand, einer Heizfolie oder dem Mikrofongehäuse besteht.

4. Photoakustischer Gassensor (1) nach Patentanspruch 3, **dadurch gekennzeichnet, dass** der Draht (12) aus Nikrothal oder Konstantan besteht.

5. Photoakustischer Gassensor (1) nach Patentanspruch 4, **dadurch gekennzeichnet, dass** die Vorrichtung zur Überwachung explosionssicher betrieben wird, indem durch das Heizelement (9) ein Strom von maximal 1 mA fliesst und die vom Heizelement (9) und den Komponenten der Schaltung (11) erreichte Höchsttemperatur maximal 135°C beträgt.

6. Photoakustischer Gassensor (1) nach Patentanspruch 5, **dadurch gekennzeichnet, dass** der Draht (12) auf einem zylindrischen Träger (13) angeordnet ist, der dem Mikrofon (6) angefügt ist.

7. Photoakustischer Gassensor (1) nach Patentanspruch 6, **dadurch gekennzeichnet, dass** der zylindrische Träger (13) als Halterung für das Mikrofon (6) ausgebildet ist.

8. Photoakustischer Gassensor (1) nach den Patentansprüchen 6 oder 7, **dadurch gekennzeichnet, dass** der Draht (12) durch Schlitze (15) am oberen Rand des zylindrischen Trägers (13) und in einer Kerbe (14) an der Aussenseite des zylindrischen Trägers (13) geführt ist und sowohl unter als auch über dem Draht (12) ein Luftraum besteht.

9. Photoakustischer Gassensor (1) nach Patentanspruch 8, **dadurch gekennzeichnet, dass** das EEPROM (22) ein serielles EEPROM mit IIC-Bus ist, dessen Clocksignal zum Takten der ersten Treiberschaltung (18) zum Betrieb des Heizelementes (9) zugeführt ist.

10. Photoakustischer Gassensors (1) nach den Patentansprüchen 3 bis 9, **dadurch gekennzeichnet, dass** zur Reduzierung des elektrischen Übersprechens vom Heizelement (9) auf das Mikrofon (6) auf ein Minimum die Spannung (V[HE]) für das Heizelement in Bezug auf das Mikrofonsignal (V[M]) phasenverschoben ist und die thermische Trägheit des Drahtes (12) so gewählt wird, dass die Temperatur (T[HE])des Heizelements und somit das aufgrund der künstlichen Druckmodulierung erzeugte Überwachungssignal mit dem Mikrofonsignal (V[M]) annähernd in Phase ist.

## Claims

1. Photo-acoustic gas sensor (1) for measuring the concentration of gases, having a measuring cell (2), a light source, a photodiode (17) a gas-permeable diaphragm (7), a microphone (6) and a circuit (11) for operating the light source and evaluating the microphone signals, **characterized in** a device for monitoring correct functioning of the gas-permeable diaphragm (7) and the microphone and for effecting a calibration of the microphone sensitivity and for active, modulated heating of the air situated in the measuring cell (2) for the purpose of producing an artificial pressure modulation, which is independent of the presence in the measuring cell (2) of gases to be detected, as well as in a microprocessor (21) for operating the device for producing the modulated heating, for processing and evaluating monitoring signals produced as a result of the artificial pressure modulation by the microphone (6) in order to determine the function state of the microphone (6) and the diaphragm (7) and for determining and calibrating the microphone sensitivity, the said microprocessor (21) being part of the circuit (11), wherein the values of the monitoring signals are assigned to ranges and their variation over time is evaluated by the microprocessor (21), wherein upon a monitoring signal in a first positive range a signal for correct functioning of the gas-permeable diaphragm (7) and the microphone (6) is produced, upon a monitoring signal which within a second range adjacent to the first varies slowly over time owing to a long-term drift, a calibration of the microphone sensitivity is effected by calculating in accordance with the value of the monitoring signal new gas concentration values and storing the said values in an EEPROM (22), and upon a monitoring signal, which within said second range varies rapidly over time, or upon a monitoring signal outside of the first and the second range a fault signal is produced, which indicates a defect at the microphone (6) and/or the diaphragm (7).

2. Photo-acoustic gas sensor (1) according to claim 1, **characterized in that** the circuit (11) comprises a first driver circuit (18) for operating the light source as well as a second driver circuit (19) for operating the device for heating the air situated in the measuring cell (2), and a processing circuit (20) for amplifying and filtering the monitoring signals produced by the microphone (6), and **in that** in the microprocessor (21) occurs an evaluation of the monitoring signals in comparison with preset value ranges, a calculation of gas concentration values according to the determined microphone sensitivity and storing of the gas concentration values in the EEPROM (22).

3. Photo-acoustic gas sensor (1) according to claim 2, **characterized in that** the device for modulated heating of the air situated in the measuring cell (2) comprises an electrical heating element (9), which consists of a wire (12), a resistor, a heating film or the microphone housing.

4. Photo-acoustic gas sensor (1) according to claim 3, **characterized in that** the wire (12) is made of Nikrothal or constantan.

5. Photo-acoustic gas sensor (1) according to claim 4, **characterized in that** the monitoring device is operated in an explosion-protected manner by a current of at most 1 mA flowing through the heating element (9) and the maximum temperature reached by the heating element (9) and the components of the circuit (11) being at most 135°C.

6. Photo-acoustic gas sensor (1) according to claim 5, **characterized in that** the wire (12) is disposed on a cylindrical carrier (13) which is attached to the microphone.

7. Photo-acoustic gas sensor (1) according to claim 6, **characterized in that** the cylindrical carrier (13) takes the form of a mounting for the microphone.

8. Photo-acoustic gas sensor (1) according to claims 6 or 7, **characterized in that** the wire (12) is conveyed through slots (15) at the top edge of the cylindrical carrier (13) and in a notch (14) at the outside of the of the cylindrical carrier (13) and there is an air space both below and above the wire (12).

9. Photo-acoustic gas sensor (1) according to claim 8, **characterized in that** the EEPROM (22) is a serial EEPROM with an IIC bus, the clock signal of which is supplied for clocking purposes to the first driver circuit (18) for operating the heating element (9).

10. Photo-acoustic gas sensor (1) according to claims 3 through 9, **characterized in that** for minimization of the electrical cross-talk between the heating element (9) and the microphone (6) the voltage (V[HE]) for the heating element is phase shifted with respect to the microphone signal (V[M]) and the thermal inertia of the wire (12) is chosen such that the temperature (T[HE]) of the heating element and thus the electrical signal resulting from the artificial pressure modulation is approximately in phase with the microphone signal (V[M]).

## Revendications

1. Détecteur de gaz photo-acoustique (1) pour mesurer des concentrations de gaz, comprenant une cellule de mesure (2), une source lumineuse, une photodiode (17), une membrane perméable au gaz (7), un microphone (6) et un circuit (11) pour faire fonctionner la source lumineuse et pour exploiter les signaux du microphone, **caractérisé par** un dispositif de contrôle de l'aptitude à fonctionner de la membrane perméable au gaz (7) et du microphone (6) et pour l'exécution d'un étalonnage de la sensibilité du microphone, aussi que pour l'échauffement modulé actif de l'air se trouvant dans la cellule de mesure (2) afin de produire une modulation de pression artificielle indépendante de la présence de gaz à détecter dans la cellule de mesure (2), ainsi qu' un microprocesseur (21) formant une partie du circuit (II) pour le fonctionnement du dispositif, pour créer l'échauffement modulé et traiter et exploiter les signaux de contrôle produits sur la base de la modulation de pression artificielle du microphone (6) pour déterminer l'état de fonctionnement du microphone (6) et de la membrane (7) et pour déterminer et étalonner la sensibilité du microphone, dans lequel il s' effectue par le microprocesseur (21) une affectation des grandeurs des signaux de contrôle à des zones et une évaluation de la modification dans le temps des signaux de contrôle et, pour un signal de contrôle dans une première zone positive, une information de bon fonctionnement de la membrane perméable au gaz (7) et du microphone (6) est émise, et, pour un signal de contrôle qui à l'intérieur d'une deuxième zone voisine de la première se modifie lentement dans le temps à la suite d'une dérive pendant une longue durée, il s'effectue un étalonnage de la sensibilité du microphone par le fait que conformément à la grandeur du signal de contrôle de nouvelles valeurs de concentration du gaz son calculées et mémorisées dans une EEPROM (22) et, pour un signal de contrôle qui se modifie rapidement dans le temps à l'intérieur de cette deuxième zone, ou pour un signal de commande à l'extérieur de la première et deuxième zone, il est émis un avertissement de dérangement, qui indique un défaut du microphone (6) et ou de la membrane (7).

2. Détecteur de gaz photo-acoustique (1) selon la revendication 1, **caractérisé en ce que** le circuit (11) comprend un premier circuit (18) d'attaque pour le fonctionnement de la source lumineuse, un deuxième circuit (19) d'attaque pour le fonctionnement du dispositif pour réchauffement de l'air se trouvant dans la cellule de mesure (2) et un circuit de traitement (20) pour amplifier et filtrer les signaux de contrôlé émis par le microphone (6) et **en ce qu'**il s'effectue dans le microprocesseur (21) une exploitation des signaux de contrôle par rapport aux zones données de valeur données à l'avance et un calcul des valeurs de concentration de gaz conformément à la sensibilité déterminée du microphone et de sa mémorisation dans l'EEPROM (22).

3. Détecteur de gaz photo-acoustique (1) suivant la revendication 2, **caractérisé en ce que** le dispositif pour l'échauffement modulé, de l'air se trouvant dans la cellule de mesure (2) comprend un élément de chauffage électrique (9); formé par un fil (12), une résistance, une feuille de chauffage ou le boîtier du microphone.

4. Détecteur de gaz photo-acoustique (1) suivant la revendication 3; **caractérisé en ce que** le fil (12) est en nikrothal ou en constantan.

5. Détecteur de gaz photo-acoustique (1) suivant la revendication 4, **caractérisé par** ce que le dispositif de contrôle est antidéflagrant, par le fait que l'élément de chauffage (9) utilise un courant maximal de 1mA et que la température atteinte par l'élément de chauffage (9) et par les composants du circuit (11) s'élève au maximum à 135 °C.

6. Détecteur de gaz photo-acoustique (1) suivant la revendication 5, **caractérisé par** ce que le fil (12) est disposé sur un support cylindrique (13) qui est adjoint au microphone (6).

7. Détecteur de gaz photo-acoustique (1) suivant la revendication 6, **caractérisé par** ce que le support cylindrique (13) est constitué en une fixation pour le microphone (6).

8. Détecteur de gaz photo-acoustique (1) suivant la revendication 6 ou 7, **caractérisé en ce que** le fil (12) passe dans une fente (15) du bord supérieur du support cylindrique (13) et dans une encoche (14) sur le côté extérieur du support cylindrique (13) et ainsi aussi bien en-dessous qu'au dessus du fil (12) il existe un espace d'air.

9. Détecteur de gaz photo-acoustique (1) suivant la revendication 8, **caractérisé en ce que** l' EEPROM (22) est une EEPROM sérielle à bus- IIC, dont le signal d'horloge est envoyé pour cadencer le premier circuit (18) d'attaque, pour le fonctionnement de l'élément de chauffage (9).

10. Détecteur de gaz photo-acoustique (1) suivant les revendications 1 à 9, **caractérisé en ce que**, pour réduire la diaphonie électrique de l'élément de chauffage (9) sur le microphone (6) à un minimum, la tension (V[HE]) pour l'élément de chauffage par rapport au signal (V[M]) du microphone est déphasée et l'inertie thermique du fil (12) est choisie de manière telle que la température (T[HE]) de l'élément de chauffage et ainsi le signal de contrôle produit sur la base de la modulation de pression artificielle est approximativement en phase avec le signal du microphone (V[M]).
